# EUROPÄISCHE PATENTSCHRIFT

(11) **EP 0 328 750 B1**
(45) Veröffentlichungstag und Bekanntmachung des Hinweises auf die Patenterteilung: **29.12.1993**
(21) Anmeldenummer: 88119753.7
(22) Anmeldetag: 26.11.1988
(51) Int. Cl.: G05B 19/42, G05B 19/41

(54) **Nachformanordnung**
Copying device
Dispositif de copiage

(30) Priorität: 16.02.1988 DE 3804743
(43) Veröffentlichungstag der Anmeldung: 23.08.1989
(73) Patentinhaber: Dr. Johannes Heidenhain GmbH, D-83292 Traunreut (DE)
(72) Erfinder: Vollmayr, Norbert, Dipl.-Ing., D-8221 Traunwalchen (DE)

(56) Entgegenhaltungen:
- EP-A- 0 152 772
- EP-A- 0 227 842
- FR-A- 2 125 069
- FR-A- 2 466 798
- GB-A- 2 192 075
- TECHNISCHE RUNDSCHAU. no. 20, Mai 1986, BERN CH Seiten 150 - 153; RUEGG ARMIN: "OZELOT-CNC FÜR KOMPLEXE 3D-FORMEN"
- WERKSTATTSTECHNIK, ZEITSCHRIFT FUR INDUSTRIELLE FERTIGUNG. vol. 62, no. 9, September 1972, BERLIN DE Seiten 544-548;STUTE G.& EISINGER J.: "DIE FRÄSERBAHNABWEICHUNG BEI EINER NUMERISCH GESTEUERTEN 5-ACHSEN-FRÄSMASCHINE"

## Beschreibung

Die Erfindung bezieht sich auf eine Nachformanordnung zum Herstellen von Werkstücken gemäß dem Oberbegriff des Anspruches 1.

Die Herstellung von Werkstücken mit beispielsweise räumlich gekrümmten Flächen gehört zu den anspruchsvollsten Zerspanungsaufgaben. In der Vergangenheit sind zu diesem Zweck vor allem die Nachformtechniken immer mehr verbessert worden.

Seit der breiten Einführung der numerisch gesteuerten Bearbeitungsmaschinen wurde jedoch der Weiterentwicklung der sogenannten Kopierfräsmaschinen nicht mehr sehr viel Aufmerksamkeit geschenkt.

Erst in jüngster Zeit gewinnt die Nachformung räumlicher Modelle wieder an Bedeutung, und zwar durch die Anwendung der NC-Technologie bei Maschinen für die Nachformung von mathematisch schwer zu beschreibenden Freiformflächen.

Um beispielsweise an NC-gesteuerten Kopierfräsmaschinen ein Werkstück nachzuformen wird ein Modell des Werkstücks mittels eines Meßfühlers abgetastet und die auf diese Weise gewonnenen Abmessungsdaten werden im Digitalspeicher der NC-Steuerung der Maschine abgespeichert. Aus diesem Grund spricht man von "Digitalisierung räumlicher Modelle". Ein derartiges Digitalisierungsverfahren wird in der EP-A1-227842 beschrieben.

Da jedoch ein Digitalisierungsverfahren nicht Gegenstand der vorliegenden Erfindung ist, sei hier nicht näher darauf eingegangen. Die Daten, die beispielsweise von einem Meßfühler als Abmessungsdaten des Werkstückes ermittelt wurden, sind allerdings fehlerbehaftet, denn der Meßfühler hat an seinem Tastarm eine räumliche Ausdehnung - im allgemeinen eine Abtastkugel. Das Werkzeug, mit dem die Oberfläche des Werkstücks erzeugt werden soll, hat ebenfalls eine räumliche Ausdehnung - die im allgemeinen nicht dem Radius der Abtastkugel des Meßfühlers entspricht. Diese Differenzen und die Unterschiede der Antastrichtung bei der Aufnahme der Daten und die Bearbeitungsrichtung bei der Abarbeitung der Daten müssen bei der Verarbeitung der gewonnenen Abmessungsdaten des Modells berücksichtigt werden.

Der apparative Aufwand ist bei einer NC-gesteuerten Nachformmaschine dementsprechend hoch, denn neben der NC-Maschine wird noch ein leistungsfähiger Personalcomputer nebst Peripherie benötigt.

In einem Bericht in der Zeitschrift "Werkzeug & Formbau" vom Juni 1987 ist auf den Seiten 79 und 80 eine derartige Anordnung beschrieben.

Der Erfindung liegt die Aufgabe zugrunde eine Nachformanordnung zum Herstellen von Werkstücken zu schaffen, die mit den herkömmlichen Mitteln einer mit einer Bahnsteuerung ausgestatteten Werkzeugmaschine die Reproduktion von Freiformflächen ermöglicht.

Diese Aufgabe wird von einer Nachformanordnung mit den Merkmalen des Anspruches 1 gelöst.

Die Vorteile der erfindungsgemäßen Nachformanordnung liegen darin, daß mit einer Werkzeugmaschine des bisherigen Ausstattungsniveaus das Nachformen auch von Flächen möglich ist, die analytisch schwer zu erfassen sind.

Mit Hilfe eines Ausführungsbeispieles soll die Erfindung anhand der Zeichnungen noch näher erläutert werden.

Es zeigt:
- Figur 1: eine erfindungsgemäße Nachformanordnung in Form eines Blockschaltbildes;
- Figur 2: eine räumliche Fläche mit einer Kopierebene schematisch dargestellt;
- Figur 3: eine räumliche Fläche mit mehreren Kopierebenen;
- Figur 4: einen Formfräser im Eingriff;
- Figur 5: eine vergrößerte Darstellung des Formfräsers als Ausschnitt.

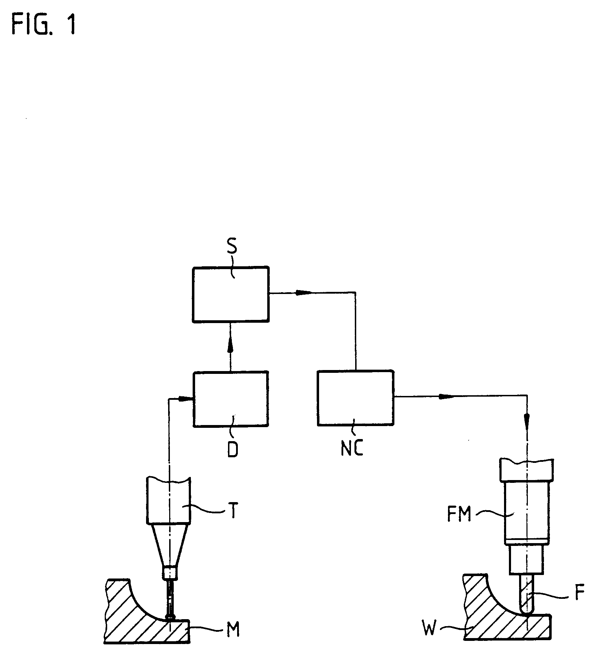

In Figur 1 ist schematisch eine Anordnung zum Fräsen von Freiformflächen gezeigt. Ein Taster T tastet in bekannter Weise ein Modell M eines Werkstückes W ab. Dabei werden Daten von der Oberfläche des abgetasteten Modells M gewonnen. Die so gewonnenen Daten werden in einer Digitalisiereinheit D aufbereitet und in einem Digitalspeicher S abgelegt. Der Digitalspeicher S kann beliebiger Bauart sein, für die hier beschriebene NC-Fräsmachine sei es ein Diskettenlaufwerk. Von der Diskette werden die Daten wieder ausgelesen und der NC-Steuerung zugeführt, die den Fräser F in der Fräsmaschine FM entsprechend der aufbereiteten Daten steuert. Dabei entsteht-innerhalb der Digitalisiergenauigkeit-ein Werkstück W mit der gleichen Geometrie, wie sie das Modell M aufweist. Da die Aufbereitung der Modelldaten in NC-gerechte Steueranweisungen in der Digitalisiereinheit D geschieht, können sie numerisch manipuliert werden. Eine Manipulation ist von Vorteil, wenn das Werkstück W in einer vom Maßstab 1:1 abweichenden Größe hergestellt oder geometrisch verzerrt werden soll.

Als ein Grenzfall kann man den Taster T und den Fräser F in Form und Durchmesser identisch wählen. Durch das Speichern der Mittelpunktsbahn des Tasters T liegt die Bahn des Werkzeugmittelpunktes direkt vor. Deshalb kann ohne eine weitere Einflußnahme der Datenbestand direkt zur Fertigung des Werkstückes W verwendet werden.

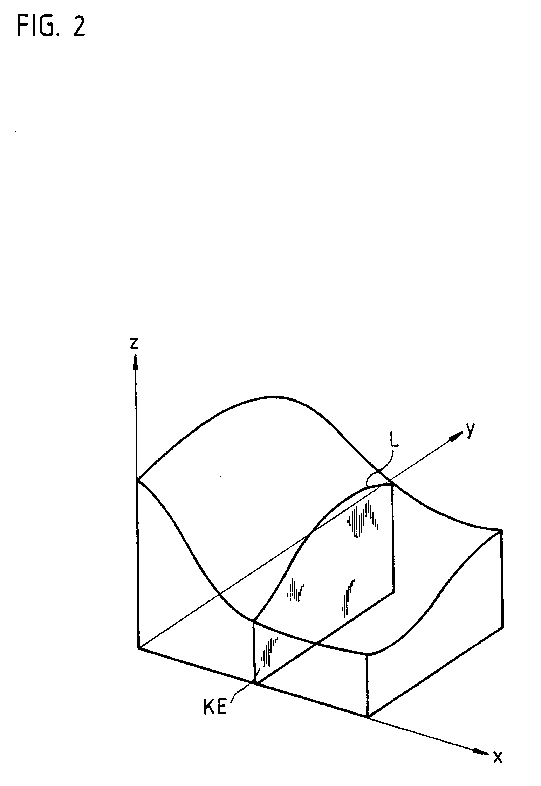

In Figur 2 ist eine räumliche Fläche in einem karthesischen Koordinatensystem mit den Achsen X, Y und Z dargestellt.

Durch das Legen ebener Schnitte KE werden in der Oberfläche Profillinien L erzeugt. Für eine vollständige Beschreibung der Fläche über derartige Profillinien L ist eine unendlich große Anzahl ebener Schnitte KE notwendig. Beim Nachformen wird nun die technische Erzeugung der räumlichen Fläche allgemein über die Erfassung der Profilform in einem ebenen Schnitt KE parallel zu einer Achse realisiert.

Während des Zerspanungsvorgangs bleibt die Geschwindigkeit in der Achse X gleich Null. Die Flächenerzeugung erfolgt jedoch schichtweise über eine endliche Anzahl von Schnitten KE aufgrund einer realen räumlichen Ausdehnung des Tasters T bzw. Werkzeugs F. Die Zustellbewegung zwischen zwei Ebenen findet erst nach Beendigung des Zerspanungsvorgangs als Stellbewegung statt. Dies entspricht somit im Prinzip der 2 1/2 D-Bahnsteuerung. Die durch die Achsen Y und Z aufgespannte Ebene innerhalb der die Zerspanungsbewegung geschieht, sei hier als Kopierebene KE definiert.

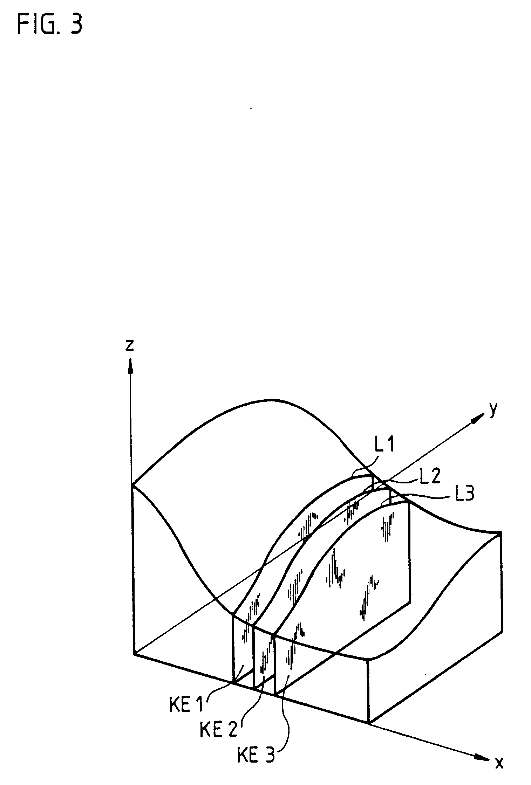

In Figur 3 ist zur Verdeutlichung dargestellt, wie beispielsweise drei Kopierebenen KE1, KE2 und KE3 nebeneinander liegen.

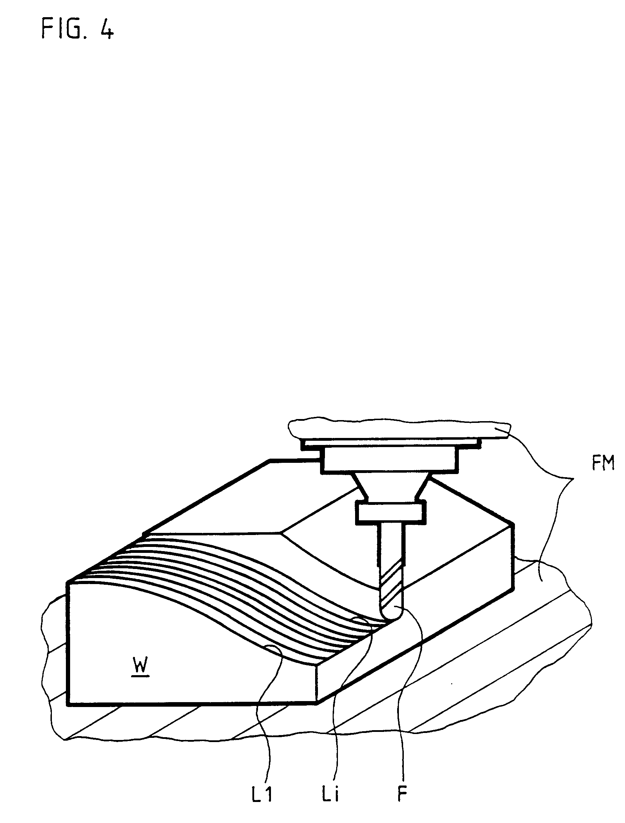

Die zeilenweise Zerspanung ist aus Figur 4 ersichtlich. Selbstverständlich kann sowohl die Abtastung als auch die Zerspanung anders, z. B. auf kreisförmiger oder sägezahnförmiger Bahn erfolgt. Es muß nur eine genügende Menge von Daten gewonnen werden.

Außer durch die in den Figuren 2 und 3 gezeigten Profillinien L läßt sich eine räumliche Fläche auch durch eine unendlich große Anzahl von Punkten beschreiben, die auf eine Bezugsebene bezogen sind, welche durch zwei Koordinatenachsen eines dreidimensionalen Koordinatensystemes definiert ist. Jedem dieser Punkte ist dann ein Wert in der dritten Koordinatenachse zugeordnet, der an diesem Punkt dem Abstand der räumlichen Fläche von der Bezugsebene entspricht. In der Praxis wird von einer endlichen Zahl von Rasterpunkten in der durch die X und Y Achse aufgespannten Ebene ausgegangen und jedem Rasterpunkt eine Höhenkoordinate Z zugeordnet. Diese Werte bilden die Längen-, Breiten- und Höhendaten.

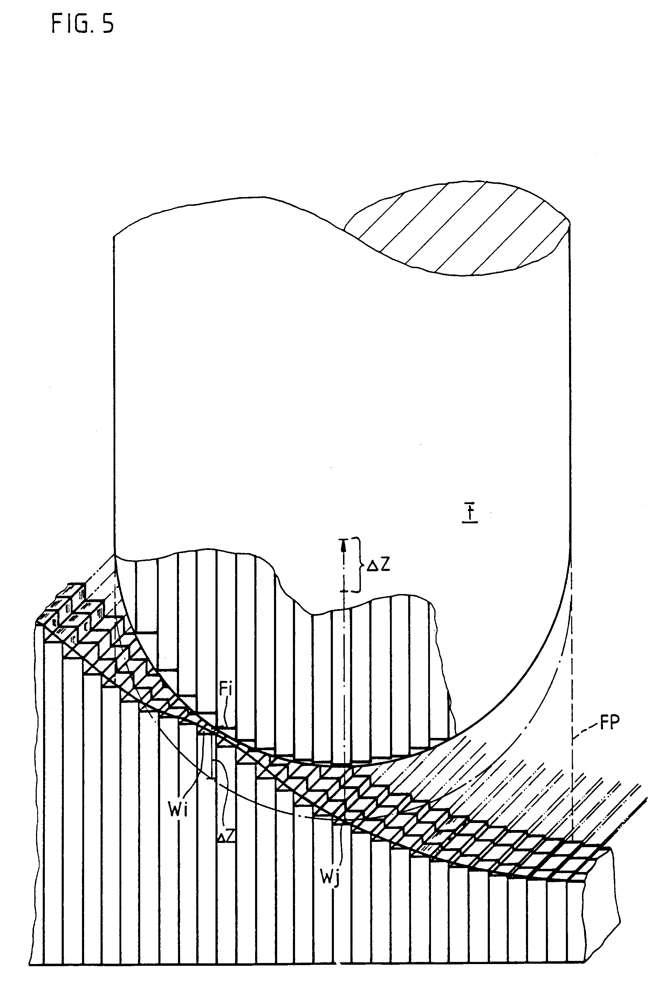

Dieser Sachverhalt ist in der stark vergrößerten Darstellung in Figur 5 verdeutlicht. Die Auflösung, d.h. die Feinheit des Rasters richtet sich nach den Erfordernissen und steigt mit der Anzahl der Rasterpunkte naturgemäß an.

Bei der Abtastung des Modells M in einem Raster der entsprechenden Auflösung läßt sich durch die Digitalisierung an jedem Speicherplatz des Digitalspeichers S ein Koordinatenwert Z für die Höhe des Modells M am Abtastpunkt in Form von Höhendaten speichern. Dieser Wert wird dann der NC-Steuerung zugeführt, mit deren Hilfe das Werkstück W gefertigt wird.

Dabei darf nicht - wie bereits beschrieben - außer acht gelassen werden, daß wegen der endlichen Ausdehnung der Abtastkugel des Tasters T nicht die reale Abmessung des Modells M, sondern die Mittelpunktsbahn der Abtastkugel des Tasters T erfaßt wird. Diese Mittelpunktsbahn entspricht einer Äquidistanten zu der Oberfläche des Modells M bzw. Werkstückes W.

Dem Abtastvorgang entspricht sinngemäß der Zerspanungsvorgang, beides erfolgt hier zeilenweise, was bedeutet, daß die Matrix der Abtastpunkte aus einer Anzahl von Zeilen und Spalten gebildet wird, wobei die Schnittpunkte das Raster der Konturelemente Wi der räumlichen Matrix bilden.

In der numerischen Steuerung NC werden die Daten des Werkstückes W mit denen des Werkzeuges F verglichen und das Vergleichsergebnis führt zu Relativbewegungen zwischen Werkstück W und Werkzeug F. Das Werkzeug F wird entsprechend seiner vorgegebenen Mittelpunktsbahn so über das Werkstück W geführt, daß sich letztlich die Kontur des Werkstückes W herausbildet, die durch die Abmessungsdaten des Werkstückes W bestimmt und vom Modell abgeleitet ist.

Ein Zerspanungsvorgang findet demgemäß solange statt, bis beim Vergleich der Daten von Werkstück W und Werkzeug F als Resultat eine räumliche Matrix entsteht, in der die Konturelemente Wk die Oberflächengestalt des herzustellenden Körpers bilden.

Bei der Umsetzung des Vergleichsergebnisses der Werkstück- und Werkzeugdaten in Steuerdaten in Form von sogenannten NC-Sätzen für die NC-Steuerung der Nachformmaschine FM müssen die individuellen Abmessungen des jeweils verwendeten Werkzeuges F,
als sogenannte relative Korrekturwerte für die Mittelpunktsbahn einbezogen werden.

Ferner wird eine Kollisonsbetrachtung durchgeführt, da bei der Datenmanipulation der sich an den Matrixschnittpunkten ergebenden Vergleichsrechnung die endliche Werkzeugabmessung berücksichtigt werden muß, wenn es nicht zu unerwünschter Abweichung in der Oberflächengestalt des Werkstückes W kommen soll.

Die Kollisionsbetrachtung erfolgt in der Weise, daß die Daten der Konturelemente Wk der Matrix in der Umgebung des Werkzeuges F auf Überschneidung mit den relativen Werkzeugdaten überprüft werden, und die Position des Werkzeuges F so gesteuert wird, daß das Konturelement Fi des Werkzeuges F und das Konturelement Wi der die Oberflächengestalt des Werkstückes W bestimmenden räumlichen Matrix, das dem Werkzeug F am nächsten ist, sich gerade berühren.

Die Ermittlung des fräsernächsten Punktes auf der gewünschten Werkstückoberfläche kann dadurch erfolgen, daß die als digitale Daten vorliegenden Abmessungen des Werkstückes W direkt mit den digitalen Abmessungsdaten des Werkzeuges F verglichen werden. Praktisch geschieht dies durch Differenzbildung, wie aus Figur 5 ersichtlich ist.

Eine weitere Möglichkeit der Ermittlung der relevanten Daten besteht darin, daß zwischen den Daten der räumlichen Matrix des Werkstückes W und denen, des Werkzeuges F in der Projektion auf das Werkstück W lediglich ein "Höhenvergleich" erfolgt, was auch auf eine Differenzbildung hinausläuft.

Die Position des Werkzeuges F richtet sich also nicht allein nach der gewünschten Oberfläche des Werkstückes W, sondern auch danach, ob in der unmittelbaren Umgebung des Werkzeuges F eine Konturerhebung vorhanden ist. Diese Konturerhebung wird erkannt und die Positionierung des Werkzeugs F wird so gesteuert, daß das Werkzeug F diese Konturerhebung gerade tangiert.

Besonders vorteilhaft können die Korrekturdaten für die Fräsermittelpunktbahn ermittelt werden, wenn die vorgenannte räumliche Matrix aus gleichmäßig beabstandeten Zeilen und Spalten aufgebaut ist, so daß jedem Konturelement Wk in einem starren Raster eine X- und eine Y-Koordinate zugeordnet ist, wobei die Oberflächenkontur des Werkstückes W durch die Menge der Höhenkoordinaten Z mit bestimmten Zahlenwerten an der jeweiligen Adresse X/Y dargestellt wird.

Bei der festen Vorgabe des Rasters der Matrix kann der Zerspanungsvorgang so gesteuert werden, daß jeweils eine Zeile der Matrix einer Vorschubzeile der zeilenweisen Bearbeitung entspricht. In diesem Fall muß für die Kollisionsbetrachtung nicht jedes Konturelement (Wk, Fk) innerhalb der Werkzeugprojektion überprüft werden, sondern es reicht, die Konturelemente zu überprüfen, die in der Spalte der Matrix liegen, die senkrecht zur Werkzeugachse verläuft. Dazu ist erforderlich, daß in der momentan bearbeiteten Zeile für die Profillinie eine Äqudistante vorab ermittelt wird. Diese Maßnahme verringert den Aufwand an Datenvergleich beträchtlich.

## Patentansprüche

1. Nachformanordnung, insbesondere Nachformmaschine (FM), zum Herstellen von Werkstücken, bei der die Oberfläche eines Modells (M) des Werkstückes (W) mittels eines Meßfühlers (T) abgetastet, dessen Mittelpunktsbahn ermittelt und die so gewonnenen Positions- und Abmessungsdaten als Werkstückdaten einer gewünschten Oberflächengestalt des Werkstückes (W) in einem Speichermedium (S) abgelegt sind, mit einer numerischen Steuerung (NC) und einem Bearbeitungswerkzeug (F), dessen Mittelpunktsbahn- und Abmessungsdaten als Werkzeugdaten ebenfalls in einem Speichermedium (S) abgelegt sind, wobei die vorgenannten Daten als Konturelemente (Wk, Fk) einer räumlichen Matrixdarstellung in Form von Längen-, Breiten- und Höhendaten abgespeichert sind, und daß in der numerischen Steuerung (NC) ein Vergleich der Werkstück- und Werkzeugdaten erfolgt, aus dessen Ergebnis Steuersignale für Positionierbewegungen zwischen Werkstück (W) und Werkzeug (F) gewonnen werden, die die gewünschte Oberflächengestalt des Werkstückes (W) bestimmen, dadurch gekennzeichnet, daß diesen Positionierbewegungen Korrekturbewegungen mit einem Korrekturbetrag (ΔZ) überlagert werden, wenn ein Vergleich der Höhendaten der Konturelemente (Wk, Fk) in Form einer Differenzbildung dieser Daten innerhalb der Projektionsfläche (FP) des Werkzeuges (F) auf die Oberfläche des Werkstückes (W) ergibt, daß innerhalb der Projektionsfläche (FP) höhere Konturelemente (Wi) vorhanden sind, als die Konturelemente (Wj) der momentan zu bearbeitenden Oberfläche des Werkstückes (W), die in der momentanen Bewegungsbahn des Werkzeuges (F) liegen, wobei der Korrekturbetrag (ΔZ) der so ermittelten Höhendaten-Differenz gleichzusetzen ist.

2. Anordnung nach Anspruch 1, dadurch gekennzeichnet, daß die räumliche Matrixdarstellung ein äquidistantes Raster aus Zeilen und Spalten aufweist, daß der Abstand der Zeilen bei der Werkstückbearbeitung dem Abstand der Matrixzeilen fest zugeordnet ist, und daß innerhalb der Projektionsfläche (FP) des Werkzeuges (F) lediglich die Konturelemente (Wk, Fk) einer Kollisionsprüfung unterzogen werden, die in der Spalte der Matrix liegen, die sich senkrecht zur Werkzeugachse befindet.

## Claims

1. Copying assembly, in particularly copying machine (FM) for the manufacture of workpieces, in which the surface of a model (M) of the workpiece (W) is scanned by means of a measuring sensor (T) of which the centre path is determined and the resulting position and dimension data are filed in a storage medium (S) as workpiece data with a desired surface shape of the workpiece (W), with numerical control means (NC) and a machine tool (F) of which the centre path and dimension data are also filed in a storage medium (S) as tool data, wherein the aforementioned data are stored in the form of length, width and height data as contour elements (Wk, Fk) of a three-dimensional matrix representation, and in the numerical control means (NC) there is a comparison of the workpiece and tool data, from the result of which are obtained control signals for positioning movements between workpiece (W) and tool (F), which determine the desired surface shape of the workpiece (W), characterized in that correction movements with a correction quantity (ΔZ) are superimposed on these positioning movements if a comparison of the height data of the contour elements (Wk, Fk) in the form of subtraction of these data within the projection area (FP) of the tool (F) onto the surface of the workpiece (W) shows that there are higher contour elements (Wi) within the projection area (FP) than the contour elements (Wj) of the surface of the workpiece (W) to be machined instantaneously, which are located in the instantaneous path of movement of the tool (F), wherein the correction quantity (ΔZ) is to be equated to the height data difference determined in this way.

2. Assembly according to claim 1, characterized in that the three-dimensional matrix representation comprises an equidistant grid of rows and columns, in that the distance between rows during workpiece machining is permanently coordinated with the distance between matrix rows, and in that within the projection area (FP) of the tool (F) only the contour elements (Wk, Fk) located in the column of the matrix which is perpendicular to the tool axis are subjected to collision testing.

## Revendications

1. Dispositif à reproduire, notamment machine à reproduire (FM), destiné à la fabrication de pièces usinées dans lequel la surface d'un modèle (M) de la pièce (W) est palpée au moyen d'un palpeur (T) dont on mesure la trajectoire de déplacement du centre et les données de position et de dimension ainsi obtenues sont mémorisées dans une mémoire (S) en tant que données de pièce correspondant à une forme souhaitée de surface de la pièce (W), dispositif comportant une commande numérique (NC) ainsi qu'un outil (F) dont les données de trajectoire de déplacement du centre et les données dimensionnelles sont également mémorisées dans une mémoire (S) en tant que données d'outil, les données mentionnées étant stockées, en tant qu'éléments de contour (Wk, Fk) d'une représentation matricielle dans l'espace, sous la forme de données de longueur, de largeur et de hauteur et une comparaison des données de pièce et des données d'outil étant effectuée dans la commande numérique (NC), comparaison de laquelle on tire des signal de commande pour des déplacements de positionnement entre la pièce (W) et l'outil (F) qui déterminent la forme souhaitée de la surface de la pièce (W), dispositif caractérisé par le fait que l'on superpose à ces déplacements de positionnement des déplacements de correction avec une grandeur de correction (Δz) lorsqu'une comparaison des données de hauteur des éléments de contour (Wk, Fk), sous la forme du calcul de la différence de ces données à l'intérieur de la surface de projection (FP) de l'outil (F) sur la surface de la pièce (W), fait apparaître qu'il existe, à l'intérieur de la surface de projection (FP), des éléments de contour (Wi) qui sont plus élevés que les éléments de contour (Wj) de la surface de la pièce (W) à usiner à cet instant et qui se trouvent sur la trajectoire instantanée de déplacement de l'outil (F), la grandeur de correction (Δz) étant posée égale à la différence de données de hauteur ainsi déterminée.

2. Dispositif selon la revendication 1, caractérisé par le fait que la représentation matricielle dans l'espace présente un réseau équidistant de lignes et de colonnes, par le fait que la distance entre les lignes pour l'usinage de la pièce est liée de manière fixe à la distance entre les lignes de matrice et par le fait que, à l'intérieur de la surface de projection (FP) de l'outil, seuls les éléments de contour (Wk, Fk) qui sont situés dans la colonne de la matrice perpendiculaire à l'axe de l'outil sont soumis à un contrôle de collision.
